# EUROPÄISCHE PATENTSCHRIFT

(11) **EP 2 143 241 B1**
(45) Veröffentlichungstag und Bekanntmachung des Hinweises auf die Patenterteilung: **01.04.2015**
(21) Anmeldenummer: 08736467.5
(22) Anmeldetag: 23.04.2008
(51) Int. Cl.: H04L 12/701, H04L 12/751, H04L 12/707, H04L 12/703, H04L 12/26, H04L 12/46

(54) **PAKETVERMITTELTES KOMMUNIKATIONSNETZWERK UND VERFAHREN ZUM REKONFIGURIEREN DES KOMMUNIKATIONSNETZWERKS**
PACKET-SWITCHED COMMUNICATION NETWORK AND METHOD FOR RECONFIGURING THE COMMUNICATION NETWORK
RÉSEAU DE COMMUNICATION À COMMUTATION DE PAQUETS, ET PROCÉDÉ DE RECONFIGURATION DU RÉSEAU DE COMMUNICATION

(30) Priorität: 10.05.2007 DE 102007021922
(43) Veröffentlichungstag der Anmeldung: 13.01.2010
(73) Patentinhaber: Siemens Aktiengesellschaft, 80333 München (DE)
(72) Erfinder: SFEIR, Elie, 80333 München (DE); KULKARNI, Vivek, 82008 Unterhaching (DE); NATHANSEN, Martin, 81679 München (DE)
(86) Internationale Anmeldenummer: PCT/EP2008/054876
(87) Internationale Veröffentlichungsnummer: WO 2008/138714

(56) Entgegenhaltungen:
- EP-A- 1 768 319
- WO-A-01/58114
- US-A- 6 032 194
- HANSEN K: "Redundancy Ethernet in industrial automation" 10TH IEEE INTERNATIONAL CONFERENCE ON EMERGING TECHOLOGIES AND FACTORY AUTOMATION, 22. September 2005 (2005-09-22), XP002495535
- CISCO: "Spanning Tree Protocol: Understanding Rapid Spanning Tree Protocol (802.1w)" INTERNET CITATION, [Online] 3. April 2005 (2005-04-03), XP002346572 Gefunden im Internet: URL:http://www.cisco.com/en/US/tech/tk389/ tk621/technologies_white_paper0 9186a0080094cfa.shtml> [gefunden am 2005-09-26]

## Beschreibung

Die Erfindung liegt auf dem Gebiet der Nachrichtentechnik und betrifft ein paketvermitteltes Kommunikationsnetzwerk, sowie ein Verfahren zum Rekonfigurieren eines solchen paketvermittelten Kommunikationsnetzwerks.

Paketvermittelte Ethernet-Netzwerke (LAN = Local Area Network) werden sowohl im industriellen Umfeld als auch in Büroumgebung eingesetzt, wobei die an die Netzwerke gestellten Anforderungen je nach Einsatzgebiet sehr verschieden sind. Im Unterschied zur Büroumgebung müssen LANs im industriellen Alltag unter extremen Bedingungen, wie elektromagnetische Störfelder, hohe Betriebstemperaturen und mechanische Beanspruchungen, zuverlässig arbeiten. Da der Ausfall einer Produktionsanlage und die damit einher gehenden Stillstandszeiten in der Regel mit hohen Kosten verbunden sind, kommt hinzu, dass in der industriellen Anwendung die Anforderungen an die Ausfallsicherheit im Allgemeinen höher sind als in Büroumgebung.

Für industrielle LANs werden aus diesem Grund robuste Komponenten eingesetzt, die schnelle Redundanzmechanismen ermöglichen, um so die Kosten im Fehlerfall möglichst gering zu halten. Zudem wird meist eine Ringtopologie für das Netzwerk gewählt, da diese bei Ausfall eines Datenlinks oder eines Netzknotens eine schnelle Rekonfigurationszeit von weniger als ca. 500 ms ermöglicht. Als Netzwerkprotokolle werden für industrielle LANs meist auf dem Ethernet-Standard basierende proprietäre Netzwerkprotokolle eingesetzt.

Demgegenüber sind LANs in Büroumgebung meist in Stern- oder Maschentopologie aufgebaut und setzen als Netzwerkprotokoll heutzutage in der Regel RSTP (RSTP = Rapid Spanning Tree Protocol) gemäß IEEE-Norm 802.1w ein.

WO 01/58114 A1 betrifft ein Netzwerk, vorzugsweise ein Ethernet-Netzwerk, mit Redundanzeigenschaften. Zur Ermittlung der Kommunikationspfade wird dabei ein modifiziertes Spanning-Tree-Verfahren eingesetzt.

EP 1 768 319 A1 offenbart ein Verfahren für eine Datenübertragung in einem Netzwerk auf Basis von RPR (Resilient Packet Ring).

US 6,032,194 A betrifft die Rekonfiguration von Computernetzwerken mit einem Netzwerkprotokoll auf Basis eines Spanning-Tree-Algorithmus.

In der praktischen Anwendung ist es häufig erforderlich, einen Datenaustausch zwischen maschenförmigen Office-LANs und ringförmigen Industrie-LANs zu ermöglichen. Zu diesem Zweck werden Office- und Industrie-LANs über entsprechende Verbindungslinks zu größeren Kommunikationsnetzwerken verbunden. Um die Ausfallsicherheit derartiger Kommunikationsnetzwerke zu erhöhen, werden meist zwei redundante Verbindungslinks zwischen den beiden Netzwerken eingerichtet, von denen jeweils nur einer zum Datenaustausch aktiv ist, während der andere Verbindungslink inaktiv ist und als Backup-Verbindungslink lediglich bei Ausfall des aktiven Verbindungslinks für den Datenaustausch aktiviert wird.

Fallen in einem solchen Kommunikationsnetzwerk innerhalb des ringförmigen Industrie-LAN mehrere lokale Datenlinks aus, so kann eine Situation eintreten, dass ein Netzknoten des Industrie-LAN selbst dann datentechnisch isoliert ist, wenn der Ring-Netzknoten mit einem inaktiven Backup-Verbindungslink verbunden ist.

Aus diesem Grund wäre es wünschenswert über ein ein Office-LAN und ein ringförmiges Industrie-LAN umfassendes Kommunikationsnetzwerk und ein entsprechendes Verfahren zur Rekonfiguration des Kommunikationsnetzwerks zu verfügen, das eine datentechnische Anbindung an das Kommunikationsnetzwerk eines innerhalb des Industrie-LAN datentechnisch isolierten Netzknotens ermöglicht.

Diese Aufgabe wird erfindungsgemäß durch ein paketvermitteltes Kommunikationsnetzwerk gemäß Patentanspruch 1 und ein Verfahren zum Rekonfigurieren des paketvermittelten Kommunikationsnetzwerks mit den Merkmalen von Patentanspruch 4 gelöst. Vorteilhafte Ausgestaltungen der Erfindung sind durch die Merkmale der Unteransprüche angegeben.

Zur Lösung der Aufgabe ist erfindungsgemäß ein paketvermitteltes Kommunikationsnetzwerk gezeigt, welches ein erstes Netzwerk und ein zweites Netzwerk umfasst.

Das erste Netzwerk wird durch über erste Datenlinks datentechnisch verbundene erste Netzknoten geswitcht. In dem ersten Netzwerk wird als erstes Netzwerkprotokoll RSTP gemäß IEEE-Norm 802.1w eingesetzt, welches eine logische Topologie in Form eines Spannbaums auf der durch die ersten Datenlinks vorgegebenen physischen Topologie des ersten Netzwerks ausbildet. Die ersten Netzknoten sind an Datenlink-Ports mit den ersten Datenlinks verbunden. Insbesondere wird somit in den mit den ersten Datenlinks verbundenen Datenlink-Ports (Port = Anschluss) der ersten Netzknoten RSTP als erstes Netzwerkprotokoll ausgeführt. Das erste Netzwerk, welches insbesondere als Office-LAN in einer Büroumgebung installiert sein kann, weist beispielsweise eine vermaschte oder sternförmige physische Topologie auf.

Das zweite Netzwerk wird durch über zweite Datenlinks datentechnisch verbundene zweite Netzknoten geswitcht. In dem zweiten Netzwerk wird als zweites Netzwerkprotokoll ein zweites Netzwerkprotokoll eingesetzt, welches von RSTP verschieden ist. Die zweiten Netzknoten sind an Datenlink-Ports mit den zweiten Datenlinks verbunden. Insbesondere wird somit in den mit den zweiten Datenlinks verbundenen Datenlink-Ports der zweiten Netzknoten das zweite Netzwerkprotokoll ausgeführt. Das zweite Netzwerk, welches insbesondere als Industrie-LAN in einer industriellen Umgebung installiert sein kann, weist beispielsweise eine ringförmige Topologie auf.

In dem erfindungsgemäßen Kommunikationsnetzwerk sind die beiden Netzwerke über wenigstens zwei Verbindungslinks, die jeweils einen Verbindungslink-Port eines ersten Netzknotens und einen Verbindungslink-Port eines zweiten Netzknotens datentechnisch miteinander verbinden, verbunden. Hierzu wird in den mit den Verbindungslinks verbundenen Netzknoten RSTP als Netzwerkprotokoll ausgeführt, wobei insbesondere in den mit den Verbindungslinks verbundenen Verbindungslink-Ports der ersten bzw. zweiten Netzknoten RSTP als Netzwerkprotokoll ausgeführt wird. Unter den Verbindungslinks ist ein Verbindungslink für den Nutzdatenaustausch voreingestellt aktiviert.

Die Verbindungslinks können einen einzelnen ersten Netzknoten mit einem einzelnen zweiten Netzknoten datentechnisch verbinden. Gleichermaßen ist es möglich, dass die Verbindungslinks mehrere erste Netzknoten mit einem selben zweiten Netzknoten datentechnisch verbunden. Gleichermaßen ist es auch möglich, dass die Verbindungslinks mehrere zweite Netzknoten mit einem selben ersten Netzknoten datentechnisch verbinden.

Mit dem Ausdruck "Verbindungslinks" werden hier und im Weiteren lediglich jene Datenlinks bezeichnet, welche die beiden Netzwerke datentechnisch miteinander verbinden.

In dem Kommunikationsnetzwerk wird ferner in den über wenigstens einen Verbindungslink mit wenigstens einem ersten Netzknoten des ersten Netzwerks verbundenen zweiten Netzknoten des zweiten Netzwerks RSTP als Netzwerkprotokoll ausgeführt, so dass diese zweiten Netzknoten ein RSTP-Netzwerk innerhalb des zweiten Netzwerks formen, wobei die Netzknoten des RSTP-Netzwerks durch von zweiten Datenlinks des zweiten Netzwerks geformten RSTP-Datenlinks miteinander verbunden sind. Insbesondere wird somit in den Datenlink-Ports der über wenigstens einen Verbindungslink mit einem ersten Netzknoten des ersten Netzwerks verbundenen zweiten Netzknoten des zweiten Netzwerks RSTP als Netzwerkprotokoll ausgeführt. In den Datenlink-Ports der über einen Verbindungslink direkt mit dem ersten Netzwerk verbundenen zweiten Netzknoten wird somit sowohl das zweite Netzwerkprotokoll, welches von RSTP verschieden ist, als auch RSTP ausgeführt. Ein Nutzdatenaustausch erfolgt in dem zweiten Netzwerk beispielsweise nur über das zweite Netzwerkprotokoll. Ein Austausch von Daten zwischen dem zweiten Netzwerkprotokoll und RSTP erfolgt lediglich von dem zweiten Netzwerkprotokoll zu RSTP und nicht von RSTP zu dem zweiten Netzwerkprotokoll.

Die RSTP-Datenlinks und die über einen Verbindungslink direkt mit dem ersten Netzwerk verbundenen Netzknoten des zweiten Netzwerks formen somit innerhalb des zweiten Netzwerks ein zweites (abstraktes) RSTP-Netzwerk, das über die Verbindungslinks mit dem ersten Netzwerk (erstes RSTP-Netzwerk) datentechnisch verbunden ist. Im Kommunikationsnetzwerk erfolgt somit eine Erweiterung der logischen Topologie des ersten RSTP-Netzwerks über die Verbindungslinks in das zweite Netzwerk hinein, worin das zweite RSTP-Netzwerk geformt ist.

In dem Kommunikationsnetzwerk sind den ersten Datenlinks des ersten Netzwerks, den Verbindungslinks und den RSTP-Datenlinks innerhalb des zweiten Netzwerks in dieser Reihenfolge fallende RSTP-Pfadkosten zugeordnet.

Das erfindungsgemäße Verfahren zum Rekonfigurieren eines solchen Kommunikationsnetzwerks umfasst die folgenden Schritte:
Erfassen eines Ausfalls eines zweiten Datenlinks des zweiten Netzwerks durch einen RSTP ausführenden zweiten Netzknoten des zweiten Netzwerks. Der Ausfall des zweiten Datenlinks kann beispielsweise durch einen fehlenden Empfang eines von dem mit dem zweiten Datenlink verbundenen Netzknoten des zweiten Netzwerks gesendeten Signals erfasst werden ("Loss-of-Signal") Der Ausfall des zweiten Datenlinks des zweiten Netzwerks durch den RSTP ausführenden zweiten Netzknoten des zweiten Netzwerks kann auch durch ein den Ausfall des zweiten Datenlinks kodierenden erstes Datenpaket erfasst werden, das bei Erfassen des Ausfalls des zweiten Datenlinks durch einen RSTP nicht ausführenden zweiten Netzknoten des zweiten Netzwerks generiert und an wenigstens einen benachbarten zweiten Netzknoten mittels des zweiten Netzwerkprotokolls weitergeleitet wird. Wird das erste Datenpaket durch einen RSTP nicht ausführenden zweiten Netzknoten des zweiten Netzwerks empfangen, wird das erste Datenpaket an wenigstens einen benachbarten zweiten Netzknoten des zweiten Netzwerks weitergeleitet, bis das erste Datenpaket einen RSTP ausführenden zweiten Netzknoten des zweiten Netzwerks erreicht, welcher das erste Datenpaket empfängt und verarbeitet, jedoch nicht weiterleitet. Bei dieser Ausgestaltung des erfindungsgemäßen Verfahrens ist es in vorteilhafter Weise möglich, dass nicht jeder zweite Netzknoten des zweiten Netzwerks über einen Verbindungslink direkt mit dem ersten Netzwerk verbunden ist. Anschließend erfolgt ein Inaktivieren eines den ausgefallenen zweiten Datenlink enthaltenden RSTP-Datenlinks, welcher mit dem den Ausfall des zweiten Datenlinks erfassenden, RSTP ausführenden zweiten Netzknoten verbunden ist.

Daraufhin wird ein den ausgefallenen zweiten Datenlink nicht enthaltender RSTP-Datenlink des den Ausfall des zweiten Datenlinks erfassenden zweiten Netzknotens auf Basis der zugewiesenen RSTP-Pfadkosten aktiviert.

Durch das erfindungsgemäße Verfahren und das Kommunikationsnetzwerk ist es somit in einfacher Weise möglich, bei Ausfall von einem oder mehreren zweiten Datenlinks des zweiten Netzwerks einen zweiten Netzknoten, der über einen inaktivierten Verbindungslink eine direkte Verbindung zum ersten Netzwerk hat und durch die Ausfälle der zweiten Datenlinks innerhalb des zweiten Netzwerks datentechnisch isoliert ist, über die Aktivierung des inaktiven redundanten Verbindungslinks wieder in das Kommunikationsnetzwerk einzubinden.

In dem obigen Verfahren kann es von Vorteil sein, wenn weiterhin die folgenden Schritte ausgeführt werden:
Erfassen der Wiederherstellung eines ausgefallenen zweiten Datenlinks des zweiten Netzwerks durch einen RSTP ausführenden zweiten Netzknoten des zweiten Netzwerks. Die Wiederherstellung des zweiten Datenlinks kann beispielsweise durch einen wiedereinsetzenden Empfang eines von dem mit dem wiederhergestellten zweiten Datenlink verbundenen Netzknoten des zweiten Netzwerks gesendeten Signals erfasst werden. Die Wiederherstellung des zweiten Datenlinks des zweiten Netzwerks durch einen RSTP ausführenden zweiten Netzknoten des zweiten Netzwerks kann auch durch ein die Wiederherstellung des zweiten Datenlinks kodierendes zweites Datenpaket erfasst werden, das bei Erfassen der Wiederherstellung des zweiten Datenlinks durch einen RSTP nicht ausführenden zweiten Netzknoten des zweiten Netzwerks generiert und an wenigstens einen benachbarten zweiten Netzknoten des zweiten Netzwerks weitergeleitet wird. Wird das zweite Datenpaket durch einen RSTP nicht ausführenden zweiten Netzknoten des zweiten Netzwerks empfangen, wird das zweite Datenpaket an wenigstens einen benachbarten zweiten Netzknoten weitergeleitet, bis das zweite Datenpaket von einem RSTP ausführenden zweiten Netzknoten des zweiten Netzwerks empfangen wird, welcher das zweite Datenpaket nicht weiterleitet.

Anschließend erfolgt ein Inaktivieren eines den wiederhergestellten zweiten Datenlink nicht enthaltenden RSTP-Datenlinks, der mit dem die Wiederherstellung des zweiten Datenlinks erfassenden zweiten Netzknoten verbunden ist.

Daraufhin erfolgt ein Aktivieren eines den ausgefallenen zweiten Datenlink enthaltenden RSTP-Datenlinks des die Wiederherstellung des zweiten Datenlinks erfassenden zweiten Netzknotens auf Basis der zugewiesenen RSTP-Pfadkosten.

Bei dieser Ausgestaltung des erfindungsgemäßen Verfahrens ist es somit in vorteilhafter Weise möglich, dass auch bei Wiederherstellung eines ausgefallenen zweiten Datenlinks RSTP-Datenlinks mit möglichst geringen Pfadkosten aktiviert werden.

Die Erfindung wird nun anhand eines Ausführungsbeispiels näher erläutert, wobei Bezug auf die beigefügten Zeichnungen genommen wird. Es zeigen:
- Fig. 1: eine schematische Darstellung zur Veranschaulichung eines Ausführungsbeispiels des erfindungsgemäßen Verfahrens zur Rekonfiguration einer logischen Topologie in einem Ausführungsbeispiel des erfindungsgemäßen Kommunikationsnetzwerks;
- Fig. 2: eine weitere schematische Darstellung zur Veranschaulichung des Ausführungsbeispiels des erfindungsgemäßen Verfahrens in dem Kommunikationsnetzwerk von Fig. 1;
- Fig. 3: eine weitere schematische Darstellung zur Veranschaulichung des Ausführungsbeispiels des erfindungsgemäßen Verfahrens in dem Kommunikationsnetzwerk von Fig. 1;
- Fig. 4: eine weitere schematische Darstellung zur Veranschaulichung des Ausführungsbeispiels des erfindungsgemäßen Verfahrens in dem Kommunikationsnetzwerk von Fig. 1;
- Fig. 5: eine weitere schematische Darstellung zur Veranschaulichung des Ausführungsbeispiels des erfindungsgemäßen Verfahrens in dem Kommunikationsnetzwerk von Fig. 1;
- Fig. 6: eine weitere schematische Darstellung zur Veranschaulichung des Ausführungsbeispiels des erfindungsgemäßen Verfahrens in dem Kommunikationsnetzwerk von Fig. 1;
- Fig. 7: eine weitere schematische Darstellung zur Veranschaulichung des Ausführungsbeispiels des erfindungsgemäßen Verfahrens in dem Kommunikationsnetzwerk von Fig. 1.

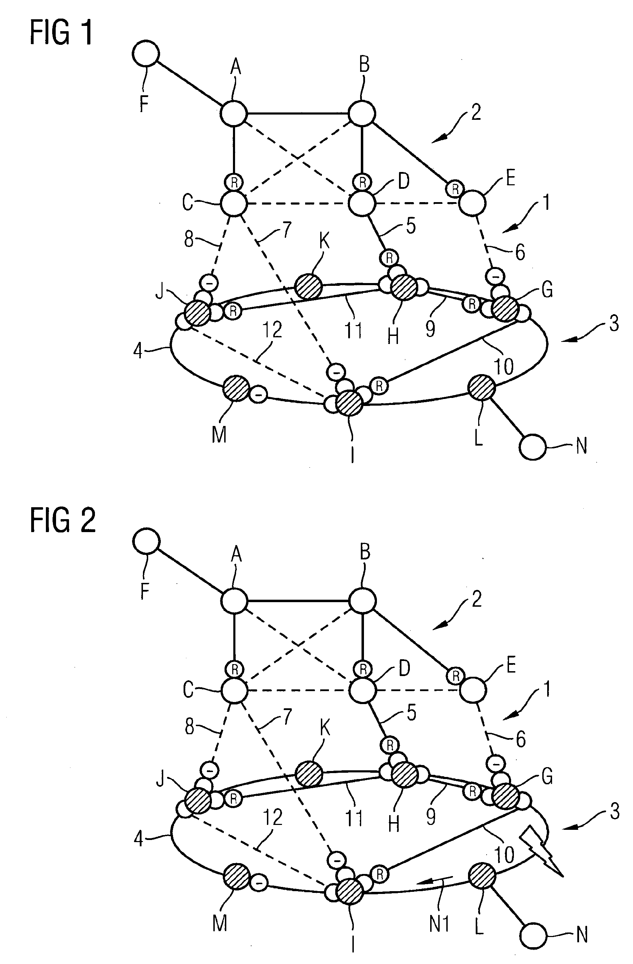

In den Figuren 1 bis 7 ist in schematischer Weise ein Ausführungsbeispiel des erfindungsgemäßen paketvermittelten Kommunikationsnetzwerks gezeigt. Ein Ausführungsbeispiel des erfindungsgemäßen Verfahrens wird in Zusammenhang mit dem beispielhaften Kommunikationsnetzwerk erläutert.

Das insgesamt mit der Bezugszahl 1 bezeichnete Kommunikationsnetzwerk umfasst ein in einer Büroumgebung installiertes, maschenförmiges, mittels einer Mehrzahl Netzknoten geswitchtes Office-LAN 2 und ein in einer industriellen Umgebung installiertes, ringförmiges, mittels einer Mehrzahl Netzknoten geswitchtes Industrie-LAN 3.

Genauer umfasst die physische Topologie des Office-LAN 2 fünf Netzknoten A-E, die über lokale Datenlinks in Form von Punkt-zu-Punkt-Verbindungsleitungen miteinander vernetzt sind. In den Figuren sind die Datenlinks des Office-LAN 2 anhand von Linien dargestellt und ansonsten nicht näher bezeichnet. Die Datenlinks des Office-LAN 2 sind jeweils mit Datenlink-Ports der Netzknoten A-E verbunden.

Als Netzwerkprotokoll wird in den Datenlink-Ports der Netzknoten A-E des Office-LAN 2 das gemäß IEEE-Norm 802.1w standardisierte Netzwerkprotokoll RSTP ausgeführt, durch welches eine auf der durch die Netzknoten A-E (in RSTP als "Brücken" bezeichnet) und die Datenlinks vorgegebenen physischen Topologie eine logische Topologie in Form eines Spannbaums eingerichtet werden kann, welche ausschließlich für den Austausch von Nutzdatenpaketen eingesetzt wird. In den Figuren sind die Datenlinks eines beispielhaften Spannbaums mittels durchgezogener Linien gekennzeichnet. Die nicht zum Spannbaum gehörenden Datenlinks sind in den Figuren mittels gestrichelter Linien dargestellt.

RSTP weist allen Netzknoten A-E und den entsprechenden Ports der Netzknoten eindeutige Kennungen (IDs= Identifikatoren) zu. Zudem ist RSTP mit der Eigenschaft versehen, dass die Netzknoten A-E die logische Topologie des Netzwerks mittels der durch sie hindurchgehenden Datenpakete selbsttätig erfassen können, indem sie die Schicht-2-Adressen des Netzwerks (MAC-Adressen, MAC = Medium Access Control) der Netzknoten nutzen.

In RSTP können die Ports der Netzknoten verschiedene Zustände annehmen. Dies sind ein Zustand "Blocking", in dem nur der Konfiguration dienende Datenpakete, so genannte Konfigurationsrahmen (BPDUs = Bridge Protocol Data Units) von den Netzknoten akzeptiert werden, ein Zustand "Listening", während dem die aktive logische Topologie in Form eines Spannbaums gebildet wird, ein Zustand "Learning", während dem eine Bridging-Tabelle aus den gelesenen MAC-Adressen zusammengestellt wird, ein Zustand "Forwarding", in dem die Ports Nutzerdaten weiterleiten und ein Zustand "Disabled", in dem Ports weder Nutzerdaten noch BPDUs empfangen oder weiterleiten.

Mit Hilfe der in den BPDUs enthaltenen Informationen können die Netzknoten die Zustände ihrer Ports in entsprechender Weise ändern. Jede BPDU enthält eine Reihe Felder, wie ein Flagfeld zum Anzeigen oder Bestätigen einer Topologieänderung, ein Rootbrücken-ID-Feld zur Identifizierung des als Rootbrücke dienenden Netzknotens mit Angabe von Priorität und ID, ein Pfadkostenfeld zur Angabe der Pfadkosten der die BPDU sendenden Rootbrücke, ein Meldungsalterfeld (MessAge) zur Angabe des Zeitraums seit Aussenden der BPDU, ein MaxAge-Feld zur Angabe einer Zeitspanne nach deren Ablauf die Meldung gelöscht werden soll, ein Hello-Zeit-Feld zur Angabe der Zeitspanne zwischen regelmäßigen Konfigurationsmeldungen (Hello-Signale) der Rootbrücke, und ein Vorwärtsverzögerungsfeld, das die Wartezeit nach einer Änderung der Topologie angibt.

Um einen Spannbaum einzurichten, werden in RSTP vier Kriterien zur Bestimmung der höchsten Prioritäten der Netzknoten beziehungsweise deren Ports verwendet. Dies sind: die kleinste Rootbrücken-ID, die geringsten Pfadkosten zur Rootbrücke, die kleinste Sendebrücken-ID und die kleinste Port-ID. Um eine Rootbrücke zu ermitteln, gehen in RSTP alle Ports der Netzknoten nach der Initialisierung (beispielsweise nach einem Neustart des Netzwerks) zunächst in den Zustand "Blocking" über, wobei jeder Netzknoten annimmt, dass er selbst eine Rootbrücke ist und eine entsprechende BPDU mit seiner eigenen ID als Rootbrücken-ID an die anderen Netzknoten sendet. Anschließend wird der Netzknoten mit der niedrigsten Rootbrücken-ID zur Rootbrücke gewählt. Bei identischer Rootbrücken-ID wird als ergänzendes Kriterium die niedrigste MAC-Adresse heran gezogen. Von der gewählten Rootbrücke aus werden anschließend alle Netzwerkpfade des Spannbaums festgelegt, über die ein Nutzdatenaustausch zwischen den Netzknoten im Kommunikationsnetzwerk erfolgen soll. Hierzu sendet die Rootbrücke BPDUs an die anderen Netzknoten. Jede Netzknoten bestimmt daraufhin als so genannten Root-Port einen Port, der die geringsten Pfadkosten zur Rootbrücke hat. Im Falle gleicher Pfadkosten wird als ergänzendes Kriterium die Port-ID heran gezogen. Anschließend werden auf Basis der Pfadkosten so genannte Designate-Ports bestimmt und die designierten Netzknoten des Spannbaums bestimmt. In RSTP werden zudem so genannte alternative Ports ermittelt, welche BPDUs von anderen Netzknoten blockieren und einen alternativen Weg zur Rootbrücke bieten, falls der Root-Port ausfällt. In den Figuren sind Root-Ports der zum Spannbaum gehörenden Datenlinks der Netzknoten C-E mit einem "R" gekennzeichnet.

Ferner ist in RSTP ein Proposal/Agreement-Handshake-Mechanismus zwischen direkt benachbarten Netzknoten implementiert. Über den Proposal/Agreement-Handshake-Mechanismus können inaktivierte Datenlinks aktiviert werden. In RSTP senden Netzknoten von sich aus in vorgebbaren zeitlichen Abständen BPDUs an die benachbarten Netzknoten, so dass ein Ausfall eines Datenlinks schnell erkannt werden kann.

In dem Office-LAN 2 ist lediglich beispielhaft ein erster Teilnehmer F (Sender/Empfänger) dargestellt, der über einen Datenlink mit einem der Netzknoten, hier Netzknoten A, datentechnisch verbunden ist.

Im Industrie-LAN 3 wird ein auf dem Ethernet-Standard basierendes proprietäres Netzwerkprotokoll ("Ringprotokoll") ausgeführt, welches von dem Netzwerkprotokoll (RSTP) des Office-LAN 2 verschieden ist. Die sieben Netzknoten G-M des Industrie-LAN 3 sind über nicht näher bezeichnete lokale Datenlinks, welche die Netzknoten G-M an Datenlink-Ports jeweils mittels Punkt-zu-Punkt-Verbindungen datentechnisch miteinander verbinden, ringförmig verbunden, wodurch die insgesamt mit der Bezugszahl 4 bezeichnete Ringstruktur des Industrie-LAN 3 geformt wird. Das Ringprotokoll wird in jedem Datenlink-Port der Netzknoten G-M ausgeführt.

Lediglich beispielhaft ist ein zweiter Teilnehmer N (Sender/Empfänger) dargestellt, der über einen Datenlink mit einem der Netzknoten, hier Netzknoten L, datentechnisch verbunden ist. Das Office-LAN 2 und das Industrie-LAN 3 sind über vier redundante Verbindungslinks 5-8 datentechnisch miteinander verbunden. Dies sind ein für den Nutzdatenaustausch voreingestellt aktivierter erster Verbindungslink 5 und drei für den Nutzdatenaustausch voreingestellt inaktivierte zweite, dritte und vierte Verbindungslinks 6-8. Der erste Verbindungslink 5 verbindet Netzknoten D des Office-LAN 2 mit Netzknoten H des Industrie-LAN 3. Als aktivierter RSTP-Port ist der mit dem ersten Verbindungslink 5 verbundene Verbindungslink-Port von Netzknoten H als Root-Port mit einem "R" gekennzeichnet. Der voreingestellt inaktive zweite Verbindungslink 6 verbindet Netzknoten E des Office-LAN 2 mit Netzknoten G des Industrie-LAN 3. In Fig. 1 ist der mit dem zweiten Verbindungslink 6 verbundene Verbindungslink-Port von Netzknoten G als blockierter Port mit einem "-" gekennzeichnet. Der voreingestellt inaktive dritte Verbindungslink 7 verbindet Netzknoten C des Office-LAN 2 mit Netzknoten I des Industrie-LAN 3. In Fig. 1 ist der mit dem dritten Verbindungslink 7 verbundene Verbindungslink-Port von Netzknotens I als blockierter Port mit einem "-" gekennzeichnet. Der Netzknoten C des Office-LAN 2 ist zudem über den voreingestellt inaktiven vierten Verbindungslink 8 mit Netzknoten J des Industrie-LAN 3 verbunden. In Fig. 1 ist der mit dem vierten Verbindungslink 8 verbundene Verbindungslink-Port von Netzknotens J als blockierter Port mit einem "-" gekennzeichnet. Der Netzknoten C des Office-LAN 2 ist somit über die beiden Verbindungslinks 7, 8 mit den beiden Netzknoten I, J des Industrie-LAN 3 verbunden.

Im Kommunikationsnetzwerk 1 sind somit vier Netzknoten G-J des Industrie-LAN 3 über vier redundante Verbindungslinks 5-8 direkt mit dem Office-LAN 2 datentechnisch verbunden, wobei der erste Verbindungslink 5 voreingestellt für einen Nutzdatenaustausch aktiviert ist und die übrigen Verbindungslinks 6-8 voreingestellt inaktiviert sind. In den Verbindungslink-Ports der die beiden Netzwerke verbindenden Verbindungslinks 5-8 ist RSTP eingerichtet, so dass ein Nutzdatenaustausch zwischen den beiden Netzwerken mittels RSTP ermöglicht ist.

Innerhalb des Industrie-LAN 3 ist zwischen den mit dem Office-LAN 2 direkt verbundenen Netzknoten G-J des Industrie-LAN 3 ein RSTP-Netzwerk eingerichtet, das beispielsweise nicht für den Nutzdatenaustausch eingesetzt wird, sondern lediglich der Übertragung von der Konfiguration dienenden Datenpaketen (BPDUs) dienen kann. In den Figuren ist das innerhalb des Industrie-LAN 3 eingerichtete RSTP-Netzwerk mittels (durchgezogener und gestrichelter) Linien zwischen den mit dem Office-LAN 2 direkt verbundenen Netzknoten G-J dargestellt, wobei die Linien keine separaten physikalischen Datenlinks darstellen, sondern lediglich der Veranschaulichung der RSTP-Datenlinks im Rahmen des RSTP-Netzwerks innerhalb des Industrie-LAN 3 dienen. Physikalisch nutzt das RSTP-Netzwerk im Industrie-LAN 3 die lokalen Datenlinks des Industrie-LAN 3.

Zur Einrichtung von RSTP innerhalb des Industrie-LAN 3 wird in den Datenlink-Ports der Netzknoten G-J (d. h. jener Netzknoten, welche über einen Verbindungslink direkt mit dem Office-LAN 2 verbunden sind) neben dem Ringprotokoll, welches beispielsweise ausschließlich für die Nutzdatenübertragung eingesetzt wird, auch RSTP ausgeführt.

So ist zwischen dem mit dem ersten Verbindungslink 5 verbundenen Netzknoten H und dem mit dem zweiten Verbindungslink 6 verbundenen Netzknoten G ein erster RSTP-Datenlink 9 eingerichtet. In Fig. 1 ist der erste RSTP-Datenlink 9 aktiviert, was durch eine durchgezogene Linie und die Kennzeichnung des entsprechenden Datenlink-Ports von Netzknoten G mit einem "R" als Root-Port dargestellt ist. Weiterhin ist zwischen dem mit dem zweiten Verbindungslink 6 verbundenen Netzknoten G und dem mit dem dritten Verbindungslink 7 verbundenen Netzknoten I ein zweiter RSTP-Datenlink 10 eingerichtet. In Fig. 1 ist der zweite RSTP-Datenlink 10 aktiviert, was durch eine durchgezogene Linie und die Kennzeichnung des entsprechenden Datenlink-Ports des Netzknotens I mit einem "R" als Root-Port dargestellt ist. Darüber hinaus ist zwischen dem mit dem ersten Verbindungslink 5 verbundenen Netzknoten H und dem mit dem vierten Verbindungslink 8 verbundenen Netzknoten J ein dritter RSTP-Datenlink 11 eingerichtet. In Fig. 1 ist der dritte RSTP-Datenlink 11 aktiviert, was durch eine durchgezogene Linie und die Kennzeichnung des entsprechenden Datenlink-Ports des Netzknotens J mit einem "R" als Root-Port dargestellt ist. Schließlich ist zwischen dem mit dem dritten Verbindungslink 7 verbundenen Netzknoten I und dem mit dem vierten Verbindungslink 8 verbundenen Netzknoten J ein vierter RSTP-Datenlink 12 eingerichtet. In Fig. 1 ist der vierte RSTP-Datenlink 12 inaktiviert, was durch eine gestrichelte Linie und die Kennzeichnung des Datenlink-Ports des entsprechenden Netzknotens I mit einem "-" als blockierter Port dargestellt ist. Der Grund für die Inaktivierung des vierten RSTP-Datenlinks 12 ist der als so genannter Redundanzmanager dienende Netzknoten M des Industrie-LAN 3. Der Redundanzmanager M des Industrie-LAN 3 kann den über das Ringprotokoll übermittelten Nutzdatenaustausch blockieren, um unerwünschte Redundanzen innerhalb der Ringstruktur 4 des Industrie-LAN 3 zu vermeiden. Der entsprechende Datenlink-Port des Redundanzmanagers M ist in Fig. 1 aus diesem Grund mit einem "-" gekennzeichnet. Da der vierte RSTP-Datenlink 12 physikalisch die mit dem Redundanzmanager M verbundenen Datenlinks der Ringstruktur 4 nutzt, führt dies in der Folge dazu, dass der vierte RSTP-Datenlink 12 zur Datenübertragung blockiert ist.

Die mit dem Office-LAN 2 nicht über einen Verbindungslink direkt verbundenen Netzknoten K, L, M des Industrie-LAN sind in der Lage, die im Rahmen von RSTP erzeugten Konfigurationsrahmen weiterzuleiten.

Den Datenlinks des Office-LAN 2, den redundanten Verbindungslinks 5-8 zur Verbindung der beiden Netzwerke und den RSTP-Datenlinks 9-12, welche die RSTP ausführenden Netzknoten des Industrie-LAN 3 verbinden, sind jeweils RSTP-Pfadkosten zugewiesen. Die Pfadkosten sind hierbei so gewählt, dass die Pfadkosten der redundanten Verbindungslinks 9-12 geringer sind als die Pfadkosten der Datenlinks des Office-LAN 2 und auch so, dass die Pfadkosten der RSTP-Datenlinks 9-12 des Industrie-LAN 3 geringer sind als die Pfadkosten der redundanten Verbindungslinks 9-12.

Durch die das Office-LAN 2 und das Industrie-LAN 3 datentechnisch miteinander verbindenden redundanten Verbindungslinks 9-12 und das auf dem Industrie-LAN 3 eingerichtete RSTP-Netzwerk erstreckt sich somit die logische Topologie (Spannbaum) des Office-LAN 2 im Rahmen einer "open-loop"-Konfiguration in das Industrie-LAN 3 hinein, wobei für den Nutzdatenaustausch innerhalb des Industrie-LAN 3 beispielsweise lediglich das proprietäre Ringprotokoll eingesetzt werden kann.

In Fig. 1 ist eine Ausgangssituation zur Ausführung des erfindungsgemäßen Verfahrens dargestellt, in dem ein mittels durchgezogener Linien angedeuteter Spannbaum im Office-LAN 2 eingerichtet ist, der erste Verbindungslink 5 für einen Nutzdatenaustausch zwischen Office-LAN 2 und Industrie-LAN 3 voreingestellt aktiviert, und ein mittels durchgezogener Linien gekennzeichnetes RSTP-Netzwerk auf dem Industrie-LAN 3 eingerichtet ist.

Fig. 2 zeigt demgegenüber eine Situation, in der ausgehend von der in Fig. 1 dargestellten Situation ein lokaler Datenlink zwischen dem Netzknoten G und dem Netzknoten L für den Nutzdatenaustausch ausfällt. Dies ist in Fig. 2 durch ein Blitzsymbol angedeutet. Der Netzknoten L, welcher nicht direkt mit dem Office-LAN 2 verbunden ist und auf dessen beiden Datenlink-Ports demnach lediglich das proprietäre Ringprotokoll des Industrie-LAN 3 ausgeführt wird, erkennt den Ausfall des Datenlinks, beispielsweise mittels einer fehlenden Signalerfassung (LOS = Loss of Signal) innerhalb einer wählbaren Zeitspanne beispielsweise mittels eines LOS-Erkennungsdetektors. Dies löst im Netzknoten L einen so genannten Hardware-Alarm aus. In der Folge wird die Generierung und Aussendung eines Datenpakets N1 durch den Netzknoten L an den benachbarten Netzknoten I getriggert, wobei das Datenpaket N1 mittels des proprietären Ringprotokolls des Industrie-LAN 3 über den Datenlink-Port, an welchem der Ausfall des Datenlinks nicht erkannt wurde, an den benachbarten Netzknoten I ausgesendet wird. Das Datenpaket N1 enthält logische Informationen, durch welche der Netzknoten I informiert wird, dass der lokale Datenlink zwischen dem Netzknoten G und dem Netzknoten L für den Nutzdatenaustausch ausgefallen ist. Zu diesem Zweck ist in dem ersten Datenpaket N1 beispielsweise ein Flag "Ausgefallener-Datenlink" gesetzt.

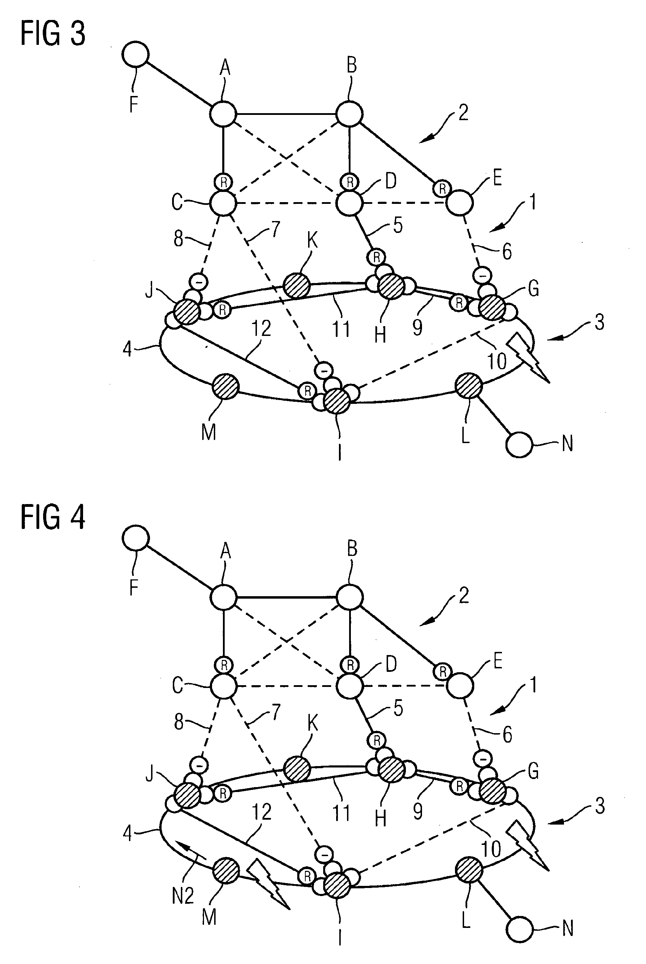

Das Datenpaket N1 wird durch den benachbarten Netzknoten I, welcher ein über den dritten Verbindungslink 7 direkt mit dem Office-LAN 2 verbundener Netzknoten des Industrie-LAN 3 ist und demnach RSTP auf seinen Datenlink-Ports ausführt, empfangen und verarbeitet. Der Netzknoten I leitet das Datenpaket N1 nicht weiter. In dem Netzknoten I wird der das Datenpaket N1 empfangende Datenlink-Port in seiner Eigenschaft als RSTP-Port in den Zustand "Blocking" versetzt. Dies ist in Fig. 3 dadurch angedeutet, dass der das Datenpaket N1 empfangende Datenlink-Port keine einen Root-Port kennzeichnende Kennung "R" mehr trägt.

Daraufhin wird auf Basis der RSTP-Pfadkosten ein anderer RSTP-Port des Netzknotens I gewählt und aktiviert. Da die RSTP-Pfadkosten so zugewiesen sind, dass die Pfadkosten der RSTP-Datenlinks innerhalb des Industrie-LAN geringer sind als die Pfadkosten der redundanten Verbindungslinks zwischen den beiden Netzwerken, wird der inaktivierte vierte RSTP-Datenlink 12 zwischen dem Netznoten I und dem Netzknoten J zur Aktivierung gewählt und aktiviert. Die Aktivierung des inaktiven vierten RSTP-Datenlinks 12 erfolgt durch einen in RSTP gemäß IEEE-Norm 802.1w implementierten Proposal/Agreement-Handshakemechanismus, wobei der entsprechende RSTP-Port des Netzknotens I vom Zustand "Blocking" in den Zustand "Forwarding" versetzt wird. Hierbei werden mehrere RSTP-Konfigurationsrahmen von den beteiligten Netzknoten I, J erzeugt und zwischen diesen über den vierten RSTP-Verbindungslink 12 ausgetauscht. Der Handshake-Mechanismus zur Aktivierung des mit dem vierten RSTP-Datenlink 12 verbundenen RSTP-Ports von Netzknoten I erfolgt mittels Routinen, die gemäß IEEE-Norm 802.1w standardisiert sind. Die Aktivierung des RSTP-Ports ist in Fig. 3 durch die Kennung "R" für den entsprechenden Datenlink-Port angedeutet. Der aktivierte vierte RSTP-Datenlink 12 ist in Fig. 3 durch eine durchgezogene Linie eingezeichnet.

Um den vierten RSTP-Datenlink 12 zu aktivieren ist es weiterhin notwendig, den durch den Redundanzmanager M blockierten Datenlink des Industrie-LAN 3 im Rahmen des proprietären Ringprotokolls zu aktivieren. Dies ist in Fig. 3 dadurch veranschaulicht, dass der entsprechende Datenlink-Port des Redundanzmanagers M nicht mehr mit einem "Minus" versehen ist.

Fig. 4 zeigt eine weitere Situation, bei der, ausgehend von der in Fig. 3 dargestellten Situation, der lokale Datenlink zwischen dem Netzknoten I und dem Netzknoten M für den Nutzdatenaustausch ausfällt. Dies ist in Fig. 4 durch ein Blitzsymbol angedeutet. Der Redundanzmanager M, auf dessen beiden Datenlink-Ports lediglich das proprietäre Ringprotokoll des Industrie-LAN 3 ausgeführt wird, erkennt den Ausfall des Datenlinks, beispielsweise durch eine fehlende Signalerfassung (LOS) innerhalb einer wählbaren Zeitspanne beispielsweise mittels eines LOS-Erkennungsdetektors. Dies löst im Redundanzmanager M einen Hardware-Alarm aus. In der Folge wird die Generierung und Aussendung eines Datenpakets N2 an den benachbarten Netzknoten J durch den Redundanzmanager M getriggert. Das Datenpaket N2 wird mittels des proprietären Ringprotokolls des Industrie-LAN 3 über den anderen Datenlink-Port des Redundanzmanagers M, an welchem kein Ausfall des Datenlinks erkannt wurde, an den benachbarten Netzknoten J ausgesendet. Das Datenpaket N2 enthält logische Informationen, durch welche der Netzknoten J informiert wird, dass der Datenlink zwischen dem Netzknoten I und dem Netzknoten M für den Nutzdatenaustausch ausgefallen ist. Zu diesem Zweck ist in dem Datenpaket N2 beispielsweise ein Flag "Ausgefallener-Datenlink" gesetzt.

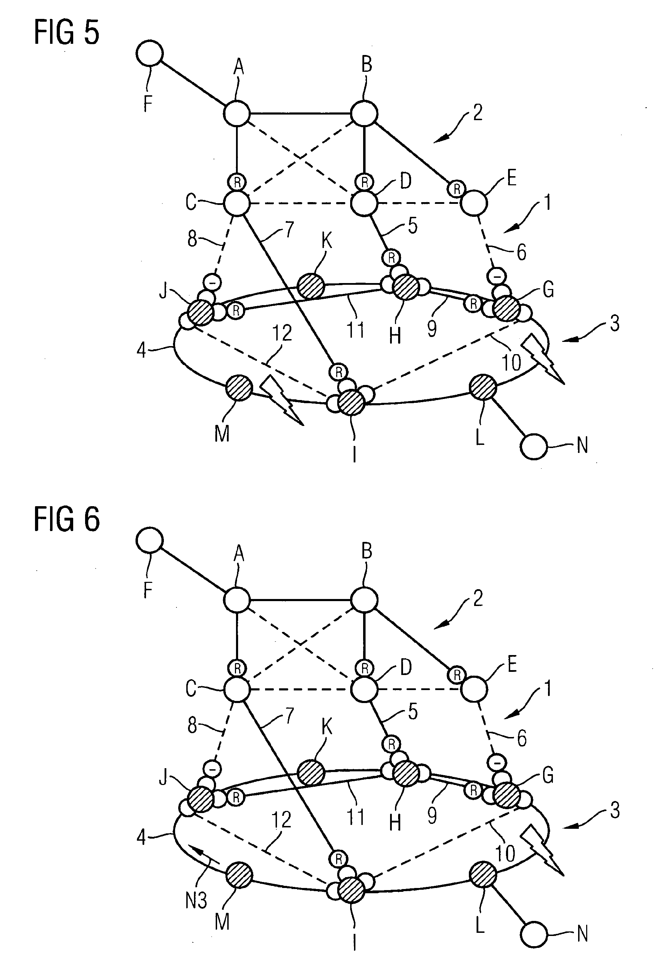

Der Netzknoten J, der über den vierten Verbindungslink 8 direkt mit dem Office-LAN 2 verbunden ist und demnach RSTP auf seinen Datenlink-Ports ausführt, empfängt und verarbeitet das zweite Datenpaket N2 und leitet es nicht weiter. Durch Empfang und Verarbeitung des Datenpakets N2 durch den Netzknoten J wird ein Proposal/Agreement-Handshakemechanismus ausgelöst, durch den der RSTP-Port des Netzknotens J in den Zustand "Blocking" versetzt und somit blockiert wird. Dies ist in Fig. 5 dadurch angedeutet, dass der entsprechende Datenlink-Port des Netzknotens I keine einen Root-Port kennzeichnende Kennung "R" mehr trägt.

Daraufhin wird auf Basis der RSTP-Pfadkosten ein anderer RSTP-Port von Netzknoten I gewählt und aktiviert. In dem vorliegenden Fall wird der letzte zur Verfügung stehende RSTP-Port und somit der inaktivierte dritte Verbindungslink 7 zwischen dem Netzknoten I und dem Netzknoten C aktiviert. Die Aktivierung des inaktiven dritten Verbindungslinks 7 erfolgt durch den in RSTP gemäß IEEE-Norm 802.1w implementierten Proposal/Agreement-Handshakemechanismus, wobei der entsprechende Verbindungslink-Port des achten Netzknotens I vom Zustand "Blocking" in den Zustand "Forwarding" versetzt wird. Hierbei werden mehrere RSTP-Konfigurationsrahmen von den beteiligten Netzknoten I, C erzeugt und über den dritten Verbindungslink 7 ausgetauscht. Die Aktivierung des entsprechenden Verbindungslink-Ports ist in Fig. 5 durch die Kennung "R" angedeutet. Der aktivierte dritte Verbindungslink 7 ist in Fig. 5 durch eine durchgezogene Linie eingezeichnet.

In dieser Situation sind das Office-LAN 2 und das Industrie-LAN 3 durch die beiden aktiven Verbindungslinks 5, 7 datentechnisch für einen Nutzdatenaustausch miteinander verbunden. Insbesondere kann durch die Aktivierung des dritten Verbindungslinks 7 ein Nutzdatenaustausch mit dem innerhalb des Industrie-LAN 3 datentechnisch isolierten Netzknotens I erfolgen.

Fig. 6 zeigt demgegenüber eine weitere Situation, bei der, ausgehend von der in Fig. 5 dargestellten Situation, der Datenlink zwischen dem Netzknoten I und dem Netzknoten M wiederhergestellt ist. Dies ist in Fig. 6 durch ein Entfernen des Blitzsymbols angedeutet. Der Redundanzmanager M erkennt daraufhin die Wiederherstellung dieses Datenlinks, beispielsweise durch eine wieder einsetzende Signalerfassung von Datenpaketen, die von dem Netzknoten I gesendet werden. Hierdurch wird die Generierung eines Datenpakets N3 getriggert, welches auf Basis des proprietären Ringprotokolls des Industrie-LAN 3 an den Netzknoten J gesendet wird. Das Datenpaket N3 enthält logische Informationen, durch welche der Netzknoten J informiert wird, dass der ausgefallene Datenlink wiederhergestellt ist. Zu diesem Zweck ist in dem Datenpaket N3 beispielsweise ein Flag "Ausgefallener-Datenlink" gelöscht.

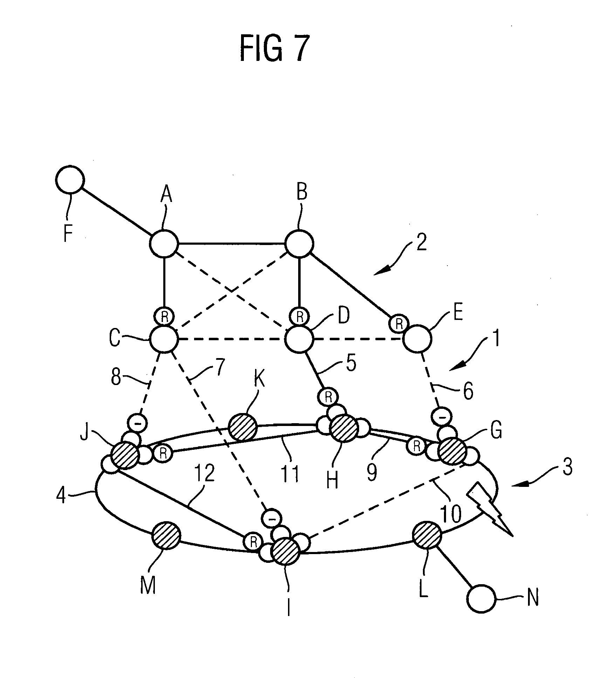

Das Datenpaket N3 wird von dem Netzknoten J, welcher RSTP auf seinen Ports ausführt, empfangen und verarbeitet und nicht weitergeleitet. Durch Empfang und Verarbeitung des Datenpakets N3 durch den Netzknoten J wird ein Proposal/Agreement-Handshakemechanismus ausgelöst, durch den der mit dem dritten Verbindungslink 7 verbundene Verbindungslink-Port des Netzknotens I in den Zustand "Blocking" versetzt wird. Dies ist in Fig. 7 dadurch gekennzeichnet, dass der entsprechende Verbindungslink-Port des Netzknotens I mit einem "-" versehen ist. Daraufhin wird auf Basis der Pfadkosten ein anderer RSTP-Port des Netzknotens I gewählt und aktiviert.

Da die RSTP-Pfadkosten so gewählt sind, dass die Pfadkosten der RSTP-Datenlinks innerhalb des Industrie-LAN 3 geringer sind als die Pfadkosten der redundanten Verbindungslinks zur Verbindung der beiden Netzwerke, wird der inaktivierte vierte RSTP-Datenlink 12 zwischen dem Netzknoten I und dem Netzknoten J aktiviert. Die Aktivierung des inaktiven vierten RSTP-Datenlinks 12 erfolgt durch einen in RSTP gemäß IEEE-Norm 802.1w implementierten Proposal/Agreement-Handshakemechanismus, wobei der entsprechende RSTP-Port des Netzknotens I vom Zustand "Blocking" in den Zustand "Forwarding" versetzt wird. Hierbei werden mehrere RSTP-Konfigurationsrahmen von den beteiligten Netzknoten I, J erzeugt und über den vierten RSTP-Verbindungslink 12 ausgetauscht. Die Aktivierung des RSTP-Ports ist in Fig. 7 durch die Kennung "R" für den entsprechenden Port gekennzeichnet. Ferner ist der aktivierte vierte RSTP-Datenlink 12 in Fig. 7 durch eine durchgezogene Linie gekennzeichnet. Damit ist eine Situation hergestellt, wie sie bereits in Fig. 3 gezeigt ist. Ein Nutzdatenaustausch zwischen dem Netzknoten I und dem Netzknoten J erfolgt mittels des proprietären Ringprotokolls über die lokalen Datenlinks des Industrie-LAN 3.

Durch das erfindungsgemäße Verfahren können somit einfach und schnell redundante Verbindungslinks zwischen dem Office-LAN und dem Industrie-LAN aktiviert werden, um auf diese Weise bei mehrfachen Ausfällen von lokalen Datenlinks des Industrie-LAN einen Nutzdatenaustausch mit ansonsten innerhalb des Industrie-LAN datentechnisch isolierten Netzknoten zu ermöglichen. Dies wird erreicht, indem das RSTP-Netzwerk des Office-LAN mittels einer "open-loop"-Topologie auf die physikalische Ringtopologie des Industrie-LAN abstrahiert (erweitert) wird. Das abstrakte RSTP-Netzwerk des Industrie-LAN enthält nur Netzknoten, die mit dem RSTP-Netzwerk direkt kommunizieren, das heißt, solche Netzknoten, die über redundante Verbindungslinks direkt mit dem RSTP-Netzwerk des Office-LAN verbunden sind. Die einfachen oder mehrfachen Datenlinks, die zwei direkt mit dem RSTP-Netzwerk des Office-LAN verbundene, konsekutive Netzknoten des Industrie-LAN miteinander verbinden, werden durch einen einzelnen Punkt-zu-Punkt RSTP-Datenlink innerhalb der RSTP-Topologie abstrahiert. Die beiden Datenlink-Ports eines RSTP-Datenlinks des Industrie-LAN sind dabei in einem blockierten Zustand, wenn die zugrunde liegenden physikalischen Datenlinks des Industrie-LAN ausfallen oder ein Datenlink-Port entlang eines solchen Datenlinks durch das proprietäre Ringprotokoll blockiert ist. Andererseits sind die beiden Datenlink-Ports eines RSTP-Datenlinks in einem weiterleitenden (forwarding) Zustand, wenn die zugrunde liegenden physikalischen Datenlinks nicht ausgefallen sind und kein Datenlink-Port entlang eines solchen Datenlinks durch das proprietäre Ringprotokoll blockiert ist. Die Pfadkosten für das RSTP-Netzwerk des Office-LAN, die Pfadkosten der die beiden Netzwerke verbindenden Verbindungslinks und die Pfadkosten der RSTP-Datenlinks innerhalb des Industrie-LAN sind in geeigneter Weise zu wählen. Die Verbindungslink-Ports der die beiden Netzwerke verbindenden redundanten Verbindungslinks werden nur durch RSTP kontrolliert und gesteuert. Die für einen Nutzdatenaustausch eingesetzten Datenlink-Ports des Industrie-LAN werden durch das proprietäre Ringprotokoll kontrolliert und gesteuert. Das neben dem Ringprotokoll auf den Datenlink-Ports der direkt mit dem Office-LAN verbundenen Netzknoten des Industrie-LAN ausgeführte Netzwerkprotokoll RSTP wird nur für die RSTP-Topologie-Abstrahierung eingesetzt, ohne dass dieses einen Effekt auf die so genannte "Forwarding-Table" bzw. den Nutzdatenverkehr hat. Daten werden lediglich vom Ringprotokoll zu RSTP geleitet, jedoch keinesfalls in die umgekehrte Richtung. Das beschriebene Verfahren garantiert somit die Kohärenz zwischen der Ringprotokoll-Konnektivität und der abstrahierten RSTP-Topologie.

Auf den mit einem oder mehreren redundanten Verbindungslinks zum Office-LAN verbundenen Ring-Netzknoten wird eine volle RSTP-Implementierung auf den Datenlink-Ports ausgeführt. Ebenso wird eine volle RSTP-Implementierung auf den Verbindungslink-Ports der Verbindungslinks zwischen dem Office-LAN und dem Industrie-LAN ausgeführt. Ring-Netzknoten, die keinen redundanten Verbindungslink zum RSTP-Netzwerk haben, führen kein RSTP, sondern lediglich das Ringprotokoll aus, und leiten empfangene RSTP-Datenpakete (Konfigurationsrahmen) unverändert an den benachbarten Ring-Netzknoten weiter. Jeder Ring-Netzknoten ist so eingerichtet, dass bei Erkennen eines Signalausfalls (LOS) entweder durch Ausfall eines Verbindungslinks mit dem Office-LAN oder durch Ausfall eines Datenlinks des Industrie-LAN ein Hardware-Alarm ausgelöst wird. Wenn ein Netzknoten des Industrie-LAN mit einem oder mehreren redundanten Verbindungslinks zum Office-LAN den/die Ausfall/Wiederherstellung eines lokalen Datenlinks erfasst, wird der ausgefallene/wiederhergestellte Port im RSTP-Protokoll aktiviert/inaktiviert. Wenn ein Netzknoten des Industrie-LAN ohne einen redundanten Verbindungslink zum Office-LAN den/die Ausfall/Wiederherstellung eines lokalen Datenlinks (des Industrie-LAN) erfasst, generiert und sendet er eine Ausfalls-/Wiederherstellungsnachricht über seinen anderen Datenlink-Port (wenn dieser nicht auch ausgefallen ist), um den nächsten Netzknoten auf dem RSTP läuft über den/die Ausfall/Wiederherstellung des Datenlinks zu informieren. Wenn ein Ring-Netzknoten mit einem oder mehreren redundanten Verbindungslinks zum RSTP-Netzwerk des Office-LAN eine Ausfalls-/Wiederherstellungsnachricht empfängt, inaktiviert/aktiviert er den empfangenden Port im RSTP-Protokoll und leitet die Nachricht nicht weiter. Wenn ein Netzknoten des Industrie-LAN ohne redundante Verbindungslinks zum RSTP-Netzwerk eine Ausfalls-/Wiederherstellungsnachricht empfängt, leitet er die Nachricht auf dem Ring weiter, ohne diese zu verarbeiten. Wenn ein Redundanzmanager des Industrie-LAN einen oder mehrere redundante Verbindungslinks zum Office-LAN hat und einen seiner weiterleitenden Datenlink-Ports in einen blockierenden Zustand versetzt (aufgrund einer Entscheidung des Ringprotokolls), inaktiviert er diesen Datenlink-Port in RSTP und sendet eine Ausfalls-Nachricht auf diesem Datenlink-Port. Wenn der Redundanzmanager keinen redundanten Verbindungslink zum RSTP-Netzwerk des Office-LAN hat und einen seiner weiterleitenden Datenlink-Ports in einen blockierenden Zustand versetzt (aufgrund einer Entscheidung des Ringprotokolls), sendet er eine Ausfalls-Nachricht auf seinen beiden Datenlink-Ports. Wenn der Redundanzmanager einen oder mehrere redundante Verbindungslinks zum RSTP-Netzwerk des Office-LAN hat und seine blockierten Datenlink-Ports in einen weiterleitenden Zustand versetzt (aufgrund einer Entscheidung des Ringprotokolls), aktiviert er den entsprechenden Datenlink-Port in RSTP und sendet eine Wiederherstellungs-Nachricht auf diesem Datenlink-Port. Wenn der Redundanzmanager keinen Verbindungslink zum RSTP-Netzwerk des Office-LAN hat und seine blockierten Datenlink-Ports in einen weiterleitenden Zustand versetzt (aufgrund einer Entscheidung des Ringprotokolls) sendet er eine Wiederherstellungs-Nachricht auf seinen beiden Datenlink-Ports. Bei jeder an einem Netzknoten des Industrie-LAN erfassten Topologieänderung werden die Forwarding-Tabellen in allen Netzknoten des Industrie-LAN gelöscht.

Die Kosten von Datenpfaden und Ports des RSTP-Netzwerks innerhalb des Industrie-LAN müssen sorgfältig gewählt werden, um sicherzustellen, dass die RSTP-Datenlinks stets gegenüber den Verbindungslinks zwischen RSTP-Netzwerk und Office-LAN bevorzugt und deren Ports somit stets im Zustand "Designated", "Root" oder "Forwarding" sind. Dies kann dadurch erreicht werden, dass im Vergleich zu den Pfadkosten der Verbindungslinks zur Verbindung der beiden Netzwerke und der Datenlinks im Office-LAN relativ niedrige Kosten für die RSTP-Datenlinks im RSTP-Netzwerk des Industrie-LAN gewählt werden. Beispielsweise können Pfadkosten in der Größenordnung von m * 10000 für die Datenlinks des Office-LAN (RSTP-Netzwerk), n * 100 für die redundanten Verbindungslinks zur Verbindung der beiden Netzwerke, und p * 1 für die RSTP-Datenlinks des abstrakten RSTP-Netzwerks des Industrie-LAN gewählt werden, um dieses Verhalten zu erzielen (mit m, n, p zwischen 0 und 10).

Das oben beschriebene Verfahren ist voll kompatibel mit dem RSTP-Standard, was bedeutet, dass alle RSTP-Datenlinks Punkt-zu-Punkt-Verbindungen sind, und dass alle RSTP-Prozeduren eingesetzt werden können, um insbesondere einen Port aus einem blockierten Zustand in einen weiterleitenden Zustand überzuführen. Nach Auftreten von mehrfachen Ausfällen und Wiederherstellungen lokaler Datenlinks des Industrie-LAN wird der entsprechende RSTP-Port inaktiviert bzw. aktiviert, wobei RSTP-Prozeduren wie üblich eingesetzt werden.

## Patentansprüche

1. Paketvermitteltes Kommunikationsnetzwerk (1), mit:
- einem ersten Netzwerk (2), das durch erste Datenlinks des ersten Netzwerks (2) verbundene erste Netzknoten (A-E) des ersten Netzwerks (2) umfasst, wobei in den ersten Netzknoten (A-E) des ersten Netzwerks (2) als erstes Netzwerkprotokoll RSTP ausgeführt wird, und
- einem zweiten Netzwerk (3), das durch zweite Datenlinks des zweiten Netzwerks (3) verbundene zweite Netzknoten (G-M) des zweiten Netzwerks (3) umfasst, wobei in den zweiten Netzknoten (G-M) des zweiten Netzwerks (3) ein von RSTP verschiedenes zweites Netzwerkprotokoll ausgeführt wird, wobei in dem Kommunikationsnetzwerk:
- die beiden Netzwerke (2, 3) über wenigstens zwei Verbindungslinks (5-8) miteinander verbunden sind, die jeweils wenigstens einen ersten Netzknoten (C-E) des ersten Netzwerks (2) und wenigstens einen zweiten Netzknoten (G-J) des zweiten Netzwerks (3) verbinden,
- in den über wenigstens einen Verbindungslink (5-8) mit wenigstens einem ersten Netzknoten (A-E) des ersten Netzwerks (2) verbundenen zweiten Netzknoten (G-J) des zweiten Netzwerks (3) sowohl das zweite Netzwerkprotokoll, welches von RSTP verschieden ist, als auch RSTP ausgeführt wird, so dass diese verbundenen zweiten Netzknoten (G-J) des zweiten Netzwerks (3) ein RSTP-Netzwerk innerhalb des zweiten Netzwerks (3) formen, dessen Netzknoten durch von zweiten Datenlinks des zweiten Netzwerks (3) geformte RSTP-Datenlinks (9-12) miteinander verbunden sind,
wobei ein RSTP ausführender zweiter Netzknoten (I, J) des zweiten Netzwerks (3) dazu ausgestaltet ist, einen Ausfall eines zweiten Datenlinks des zweiten Netzwerks (3) zu erfassen, einen
mit dem Ausfall des erfassenden zweiten Netzknotens (I, J) verbundenen RSTP-Datenlink (10, 12), der den ausgefallenen zweiten Datenlink enthält, zu inaktivieren, und einen den ausgefallenen zweiten Datenlink nicht enthaltenden RSTP-Datenlink (12, 7) des zweiten Netzknotens (I, J) auf Basis von zugewiesenen RSTP-Pfadkosten zu aktivieren,
wobei den ersten Datenlinks des ersten Netzwerks (2), den Verbindungslinks (5-8) und den RSTP-Datenlinks (9-12) des zweiten Netzwerks (3) in der folgenden Reihenfolge fallende RSTP-Pfadkosten zugeordnet sind:
- RSTP-Pfadkosten der Verbindungslinks (5-8) sind geringer als RSTP-Pfadkosten der ersten Datenlinks des ersten Netzwerks (2), und
- RSTP-Pfadkosten der RSTP-Datenlinks (9-12) des zweiten Netzwerks (3) sind geringer als die RSTP-Pfadkosten der Verbindungslinks (5-8).

2. Kommunikationsnetzwerk nach Anspruch 1, bei welchem das zweite Netzwerk (3) eine Ringstruktur (4) aufweist.

3. Kommunikationsnetzwerk nach einem der Ansprüche 1 bis 2, bei welchem das erste Netzwerk (2) in einer Büroumgebung installiert ist und das zweite Netzwerk (3) in einer industriellen Umgebung installiert ist.

4. Verfahren zum Rekonfigurieren eines paketvermittelten Kommunikationsnetzwerks (1) mit einem ersten Netzwerk (2), das durch erste Datenlinks des ersten Netzwerks (2) verbundene erste Netzknoten (A-E) des ersten Netzwerks (2) umfasst, wobei in den ersten Netzknoten (A-E) des ersten Netzwerks (2) als erstes Netzwerkprotokoll RSTP ausgeführt wird, und einem zweiten Netzwerk (3), das durch zweite Datenlinks des zweiten Netzwerks (3) verbundene zweite Netzknoten (G-M) des zweiten Netzwerks (3) umfasst, wobei in den zweiten Netzknoten (G-M) des zweiten Netzwerks (3) ein von RSTP verschiedenes zweites Netzwerkprotokoll ausgeführt wird,
wobei in dem Kommunikationsnetzwerk die beiden Netzwerke (2, 3) über wenigstens zwei Verbindungslinks (5-8) miteinander verbunden sind, die jeweils wenigstens einen ersten Netzknoten (C-E) des ersten Netzwerks (2) und wenigstens einen zweiten Netzknoten (G-J) des zweiten Netzwerks (3) verbinden, und in den über wenigstens einen Verbindungslink (5-8) mit wenigstens einem ersten Netzknoten (A-E) des ersten Netzwerks (2) verbundenen zweiten Netzknoten (G-J) des zweiten Netzwerks (3) sowohl das zweite Netzwerkprotokoll, welches von RSPT verschieden ist, als auch RSTP ausgeführt wird, so dass diese verbundenen zweiten Netzknoten (G-J) des zweiten Netzwerks (3) ein RSTP-Netzwerk innerhalb des zweiten Netzwerks (3) formen, dessen Netzknoten durch von zweiten Datenlinks des zweiten Netzwerks (3) geformte RSTP-Datenlinks (9-12) miteinander verbunden sind, mit den Schritten:
- Erfassen eines Ausfalls eines zweiten Datenlinks des zweiten Netzwerks (3) durch einen RSTP ausführenden zweiten Netzknoten (I, J) des zweiten Netzwerks (3);
- Inaktivieren eines mit dem den Ausfall erfassenden zweiten Netzknoten (I, J) verbundenen RSTP-Datenlinks (10, 12), der den ausgefallenen zweiten Datenlink enthält,
- Aktivieren eines den ausgefallenen zweiten Datenlink nicht enthaltenden RSTP-Datenlinks (12, 7) des den Ausfall des zweiten Datenlinks erfassenden zweiten Netzknotens (I, J) auf Basis von zugewiesenen RSTP-Pfadkosten,
wobei den ersten Datenlinks des ersten Netzwerks (2), den Verbindungslinks (5-8) und den RSTP-Datenlinks (9-12) des zweiten Netzwerks (3) in der folgenden Reihenfolge fallende RSTP-Pfadkosten zugeordnet sind:
- RSTP-Pfadkosten der Verbindungslinks (5-8) sind geringer als RSTP-Pfadkosten der ersten Datenlinks des ersten Netzwerks (2), und
- RSTP-Pfadkosten der RSTP-Datenlinks (9-12) des zweiten Netzwerks (3) sind geringer als die RSTP-Pfadkosten der Verbindungslinks (5-8).

5. Verfahren nach Anspruch 4, gekennzeichnet durch die Schritte:
- Erfassen der Wiederherstellung eines ausgefallenen zweiten Datenlinks (12) des zweiten Netzwerks durch einen RSTP ausführenden zweiten Netzknoten (J) des zweiten Netzwerks (3);
- Inaktivieren eines den ausgefallenen zweiten Datenlink nicht enthaltenden RSTP-Datenlinks (7), der mit dem erfassenden zweiten Netzknotens (J) verbunden ist,
- Aktivieren eines den ausgefallenen zweiten Datenlink enthaltenden RSTP-Datenlinks (12), der mit dem zweiten Netzknoten (J) verbunden ist, auf Basis der zugewiesenen RSTP-Pfadkosten.

6. Verfahren nach Anspruch 4, bei welchem bei Erfassen des Ausfalls des zweiten Datenlinks durch einen RSTP nicht ausführenden zweiten Netzknoten (L, M) des zweiten Netzwerks ein den Ausfall des zweiten Datenlinks kodierendes erstes Datenpaket (N₁, N₂) generiert und an wenigstens einen benachbarten zweiten Netzknoten (I, J) weitergeleitet wird.

7. Verfahren nach Anspruch 4, bei welchem bei Empfang des den Ausfall des zweiten Datenlinks kodierenden ersten Datenpakets durch einen RSTP nicht ausführenden zweiten Netzknoten des zweiten Netzwerks das erste Datenpaket an wenigstens einen benachbarten zweiten Netzknoten weitergeleitet wird.

8. Verfahren nach Anspruch 5, bei welchem bei Erfassen der Wiederherstellung des zweiten Datenlinks durch einen RSTP nicht ausführenden zweiten Netzknoten des zweiten Netzwerks ein die Wiederherstellung des zweiten Datenlinks kodierendes zweites Datenpaket generiert und an wenigstens einen benachbarten zweiten Netzknoten weitergeleitet wird.

9. Verfahren nach Anspruch 8, bei welchem bei Empfang des die Wiederherstellung des zweiten Datenlinks kodierenden zweiten Datenpakets durch einen RSTP nicht ausführenden zweiten Netzknoten des zweiten Netzwerks das zweite Datenpaket an wenigstens einen benachbarten zweiten Netzknoten weitergeleitet wird.

## Claims

1. Packet-switched communication network (1), having:
- a first network (2) that comprises first network nodes (A-E) of the first network (2) that are connected by first data links of the first network (2), wherein RSTP is executed in the first network nodes (A-E) of the first network (2) as a first network protocol, and
- a second network (3) that comprises second network nodes (G-M) of the second network (3) that are connected by second data links of the second network (3), wherein a second network protocol that is different from RSTP is executed in the second network nodes (G-M) of the second network (3), wherein, in the communication network:
- the two networks (2, 3) are connected to one another via at least two connecting links (5-8) that each connect at least one first network node (C-E) of the first network (2) and at least one second network node (G-J) of the second network (3),
- both the second network protocol, which is different from RSTP, and RSTP are executed in the second network nodes (G-J) of the second network (3) that are connected to at least one first network node (A-E) of the first network (2) via at least one connecting link (5-8), as a result of which said connected second network nodes (G-J) of the second network (3) form an RSTP network within the second network (3), the network nodes of which are connected to one another by RSTP data links (9-12) formed by second data links of the second network (3),
wherein an RSTP executing second network node (I, J) of the second network (3) is designed to sense failure of a second data link of the second network (3), to deactivate an RSTP data link (10, 12) that is connected to the failure of the sensing second network node (I, J) and that contains the failed second data link, and to activate an RSTP data link (12, 7) of the second network node (I, J), which RSTP data link does not contain the failed second data link, on the basis of allocated RSTP path costs,
wherein the first data links of the first network (2), the connecting links (5-8) and the RSTP data links (9-12) of the second network (3) have associated RSTP path costs falling in the following order:
- RSTP path costs of the connecting links (5-8) are lower than RSTP path costs of the first data links of the first network (2), and
- RSTP path costs of the RSTP data links (9-12) of the second network (3) are lower than the RSTP path costs of the connecting links (5-8).

2. Communication network according to Claim 1, in which the second network (3) has a ring structure (4).

3. Communication network according to either of Claims 1 and 2, in which the first network (2) is installed in an office environment and the second network (3) is installed in an industrial environment.

4. Method for reconfiguring a packet-switched communication network (1) having a first network (2) that comprises first network nodes (A-E) of the first network (2) that are connected by first data links of the first network (2), wherein RSTP is executed in the first network nodes (A-E) of the first network (2) as a first network protocol, and having a second network (3) that comprises second network nodes (G-M) of the second network (3) that are connected by second data links of the second network (3), wherein a second network protocol that is different from RSTP is executed in the second network nodes (G-M) of the second network (3),
wherein, in the communication network, the two networks (2, 3) are connected to one another via at least two connecting links (5-8) that each connect at least one first network node (C-E) of the first network (2) and at least one second network node (G-J) of the second network (3), and both the second network protocol, which is different from RSTP, and RSTP are executed in the second network nodes (G-J) of the second network (3) that are connected to at least one first network node (A-E) of the first network (2) via at least one connecting link (5-8), as a result of which said connected second network nodes (G-J) of the second network (3) form an RSTP network within the second network (3), the network nodes of which are connected to one another by RSTP data links (9-12) formed by second data links of the second network (3) having the steps of:
- sensing of a failure of a second data link of the second network (3) by an RSTP-executing second network node (I, J) of the second network (3);
- deactivation of an RSTP data link (10, 12) that is connected to the second network node (I, J) sensing the failure and that contains the failed second data link,
- activation of an RSTP data link (12, 7) of the second network node (I, J) that senses the failure of the second data link, which RSTP data link does not contain the failed second data link, on the basis of allocated RSTP path costs,
wherein the first data links of the first network (2), the connecting links (5-8) and the RSTP data links (9-12) of the second network (3) have associated RSTP path costs falling in the following order:
- RSTP path costs of the connecting links (5-8) are lower than RSTP path costs of the first data links of the first network (2), and
- RSTP path costs of the RSTP data links (9-12) of the second network (3) are lower than the RSTP path costs of the connecting links (5-8).

5. Method according to Claim 4, **characterized by** the steps of:
- sensing of the restoration of a failed second data link (12) of the second network by an RSTP-executing second network node (J) of the second network (3);
- deactivation of an RSTP data link (7) that does not contain the failed second data link and that is connected to the sensing second network node (J),
- activation of an RSTP data link (12) that contains the failed second data link and that is connected to the second network node (J), on the basis of the allocated RSTP path costs.

6. Method according to Claim 4, in which sensing of the failure of the second data link by a non-RSTP-executing second network node (L, M) of the second network prompts a first data packet (N₁, N₂) that codes the failure of the second data link to be generated and to be forwarded to at least one adjacent second network node (I, J).

7. Method according to Claim 4, in which reception of the first data packet that codes the failure of the second data link by a non-RSTP-executing second network node of the second network prompts the first data packet to be forwarded to at least one adjacent second network node.

8. Method according to Claim 5, in which sensing of the restoration of the second data link by a non-RSTP-executing second network node of the second network prompts a second data packet that codes the restoration of the second data link to be generated and to be forwarded to at least one adjacent second network node.

9. Method according to Claim 8, in which reception of the second data packet that codes the restoration of the second data link by a non-RSTP-executing second network node of the second network prompts the second data packet to be forwarded to at least one adjacent second network node.

## Revendications

1. Réseau de communication à commutation de paquets (1), comportant :
- un premier réseau (2) qui comprend des premiers noeuds de réseau (A-E) du premier réseau (2) reliés par des premiers liens de données du premier réseau (2), le RSTP étant exécuté en tant que premier protocole de réseau dans les premiers noeuds de réseau (A-E) du premier réseau (2) et
- un deuxième réseau (3) qui comprend des deuxièmes noeuds de réseau (G-M) du deuxième réseau (3) reliés par des deuxièmes liens de données du deuxième réseau (3), un deuxième protocole de réseau différent du RSTP étant exécuté dans les deuxièmes noeuds de réseau (G-M) du deuxième réseau (3),
tout en étant que, dans le réseau de communication :
- les deux réseaux (2, 3) sont connectés entre eux via au moins deux liens de connexion (5-8) qui relient respectivement au moins un premier noeud de réseau (CE) du premier réseau (2) et au moins un deuxième noeud de réseau (G-J) du deuxième noeud de réseau (3),
- non seulement le deuxième protocole de réseau différent du RSTP, mais aussi le RSTP sont exécutés dans les deuxièmes noeuds de réseau (G-J) du deuxième réseau (3) connectés, via au moins un lien de connexion (5-8), à au moins un premier noeud de réseau (A-E) du premier réseau (2), de sorte que ces deuxièmes noeuds de réseau connectés (G-J) du deuxième réseau (3) forment, au sein du deuxième réseau (3), un réseau RSTP dont les noeuds de réseau sont connectés entre eux par des liens de données RSTP (9-12) formés par des deuxièmes liens de données du deuxième réseau (3),
un deuxième noeud de réseau (I, J) du deuxième réseau (3) qui exécute le RSTP étant configuré pour détecter une défaillance d'un deuxième lien de données du deuxième réseau (3), pour désactiver un lien de données RSTP (10, 12) qui est connecté au deuxième noeud de réseau (I, J) détectant la défaillance et qui contient le deuxième lien de données défaillant, et pour activer, sur la base de coûts de chemin RSTP alloués, un lien de données (12, 7) du deuxième noeud de réseau (I, J) qui ne contient pas le deuxième lien de données défaillant,
des coûts de chemin RSTP se présentant dans l'ordre suivant étant affectés aux premiers liens de données du premier réseau (2), aux liens de connexion (5-8) et aux liens de données RSTP (9-12) du deuxième réseau (3) :
- des coûts de chemin RSTP des liens de connexion (5-8) sont inférieurs à des coûts de chemin RSTP des premiers liens de données du premier réseau (2) et
- des coûts de chemin RSTP des liens de données RSTP (9-12) du deuxième réseau (3) sont inférieurs aux coûts de chemin RSTP des liens de connexion (5-8).

2. Réseau de communication selon la revendication 1, selon lequel le deuxième réseau (3) présente une structure annulaire (4).

3. Réseau de communication selon l'une des revendications 1 à 2, selon lequel le premier réseau (2) est installé dans un environnement de bureau et le deuxième réseau (3) est installé dans un environnement industriel.

4. Procédé de reconfiguration d'un réseau de communication à commutation de paquets (1) comportant un premier réseau (2) qui comprend des premiers noeuds de réseau (A-E) du premier réseau (2) reliés par des premiers liens de données du premier réseau (2), le RSTP étant exécuté en tant que premier protocole de réseau dans les premiers noeuds de réseau (A-E) du premier réseau (2), et un deuxième réseau (3) qui comprend des deuxièmes noeuds de réseau (G-M) du deuxième réseau (3) reliés par des deuxièmes liens de données du deuxième réseau (3), un deuxième protocole de réseau différent du RSTP étant exécuté dans les deuxièmes noeuds de réseau (G-M) du deuxième réseau (3),
les deux réseaux (2, 3) étant, dans le réseau de communication, connectés entre eux via au moins deux liens de connexion (5-8) qui relient respectivement au moins un premier noeud de réseau (C-E) du premier réseau (2) et au moins un deuxième noeud de réseau (G-J) du deuxième noeud de réseau (3), et non seulement le deuxième protocole de réseau différent du RSTP, mais aussi le RSTP étant exécutés dans les deuxièmes noeuds de réseau (G-J) du deuxième réseau (3) connectés, via au moins un lien de connexion (5-8), à au moins un premier noeud de réseau (A-E) du premier réseau (2), de sorte que ces deuxièmes noeuds de réseau connectés (G-J) du deuxième réseau (3) forment, au sein du deuxième réseau (3), un réseau RSTP dont les noeuds de réseau sont connectés entre eux par des liens de données RSTP (9-12) formés par des deuxièmes liens de données du deuxième réseau (3), comportant les étapes suivantes :
- détection d'une défaillance d'un deuxième lien de données du deuxième réseau (3) par un deuxième noeud de réseau (I, J) du deuxième réseau (3) exécutant le RSTP ;
- désactivation d'un lien de données RSTP (10, 12) qui est connecté au deuxième noeud de réseau (I, J) détectant la défaillance et qui contient le deuxième lien de données défaillant ;
- activation, sur la base de coûts de chemin RSTP alloués, d'un lien de données RSTP (12, 7), qui ne contient pas le deuxième lien de données défaillant, du deuxième noeud de réseau (I, J) qui détecte la défaillance du deuxième lien de données,
des coûts de chemin RSTP se présentant dans l'ordre suivant étant affectés aux premiers liens de données du premier réseau (2), aux liens de connexion (5-8) et aux liens de données RSTP (9-12) du deuxième réseau (3) :
- des coûts de chemin RSTP des liens de connexion (5-8) sont inférieurs à des coûts de chemin RSTP des premiers liens de données du premier réseau (2) et
- des coûts de chemin RSTP des liens de données RSTP (9-12) du deuxième réseau (3) sont inférieurs aux coûts de chemin RSTP des liens de connexion (5-8).

5. Procédé selon la revendication 4, **caractérisé par** les étapes suivantes :
- détection du rétablissement d'un deuxième lien de données défaillant (12) du deuxième réseau par un deuxième noeud de réseau (J) du deuxième réseau (3) exécutant le RSTP ;
- désactivation d'un lien de données RSTP (7) qui ne contient pas le deuxième lien de données défaillant et qui est connecté au deuxième noeud de réseau détecteur (J) ;
- activation, sur la base des coûts de chemin RSTP alloués, d'un lien de données RSTP (12) qui contient le deuxième lien de données défaillant et qui est connecté au deuxième noeud de réseau (J).

6. Procédé selon la revendication 4, selon lequel, à la détection de la défaillance du deuxième lien de données par un deuxième noeud de réseau (L, M) du deuxième réseau n'exécutant pas le RSTP, un premier paquet de données (N₁, N₂) codant la défaillance du deuxième lien de données est généré et est retransmis à au moins un deuxième noeud de réseau voisin (I, J).

7. Procédé selon la revendication 4, selon lequel, à la réception, par un deuxième noeud de réseau du deuxième réseau n'exécutant pas le RSTP, du premier paquet de données codant la défaillance du deuxième lien de données, le premier paquet de données est retransmis à au moins un deuxième noeud de réseau voisin.

8. Procédé selon la revendication 5, selon lequel, à la détection du rétablissement du deuxième lien de données par un deuxième noeud de réseau du deuxième réseau n'exécutant pas le RSTP, un deuxième paquet de données codant le rétablissement du deuxième lien de données est généré et est retransmis à au moins un deuxième noeud de réseau voisin.

9. Procédé selon la revendication 8, selon lequel, à la réception, par un deuxième noeud de réseau du deuxième réseau n'exécutant pas le RSTP, du deuxième paquet de données de données codant le rétablissement du deuxième lien de données, le deuxième paquet de données est retransmis à au moins un deuxième noeud de réseau voisin.
